# EUROPEAN PATENT SPECIFICATION

(11) **EP 0 981 940 B1**
(45) Date of publication and mention of the grant of the patent: **03.03.2004**
(21) Application number: 99306239.7
(22) Date of filing: 06.08.1999
(51) Int. Cl.: A01C 17/00, A01C 7/16

(54) **Meter assembly for controlling materials**
Zähleranordnung zur Kontrolle von Materialen
Compteur pour le contrôle de matériaux

(30) Priority: 21.08.1998 US 138133
(43) Date of publication of application: 01.03.2000
(73) Proprietor: BASF AKTIENGESELLSCHAFT, 67056 Ludwigshafen (DE)
(72) Inventor: Woodruff, Keith Floyd, Mountainside, New Jersey 07092 (US)
(74) Representative: Müller, Jörg Uwe

(56) References cited:
- EP-A- 0 140 701
- EP-A- 0 541 921
- US-A- 2 164 333
- US-A- 4 500 017
- US-A- 5 058 766
- US-A- 5 287 999

## Description

The present invention is directed to a meter assembly for controlling discharge of material as disclosed by US-A-4 500 017 according to the preamble of claim 1. The invention is particularly adapted for dispensing agricultural material, such as pesticides, herbicides, and fungicides from an apparatus driven over terrain onto which the treatment material is applied.

Agricultural dispensing apparatus, more commonly known as granular or broadcast spreaders, generally include a wheeled vehicle, either self powered (e.g., motorized) or manually driven, including a housing having a hopper for receiving a container holding product to be dispensed, and metering means for controlling the quantity of material flowing from the product container, by gravity feed, on to dispensing means, such as a spinning plate positioned beneath the metering means for receiving material deposited thereon and dispensing material therefrom by rotational forces. The apparatus is driven along the terrain to be treated, and the material to be applied to the terrain is dispensed from the moving apparatus. Known apparatus are exemplified in the prior art, for example, a closed dispensing system for chemical granular material and a valve system particularly for use with agricultural equipment.

Granular agricultural dispensers generally include metering systems having a rotatable apertured metering disk disposed between a product container and means for discharging product from the dispensing apparatus. Removal of the metering disk from the apparatus is required for several different purposes including inspection, maintenance, repair, and replacement. Moreover, different metering disks can be interchangeably mounted in the dispensing apparatus to adjust the pattern of flow of product through the rotatable metering disk, the quantity of product flowing through the metering disk, or the rate at which product flows through the metering disk. In the known dispensing devices, it is necessary to substantially disassemble the entire apparatus to remove the metering disk from the meter assembly.

It is the primary object of the present invention to provide means for readily removing the metering disk of a dispensing apparatus without disassembling the apparatus. It is a further object of the present invention to provide guide means by which the metering disk can be readily returned to its proper operating position within the dispensing apparatus. Other objects, improvements and advantages of the present invention will be apparent from the following discussion herein.

The apparatus includes container means for holding a supply of material to be dispensed from the apparatus, and a metering system for controlling the quantity, rate and pattern at which material is dispensed from the apparatus. The metering system includes a rotatable apertured disk positioned relative to the container means such that material from the container means flows through the metering disk before the material is discharged from the dispensing apparatus. Means are provided for removing the metering disk from the meter assembly of the dispensing apparatus, for example, to inspect, maintain, repair or replace the metering disk, without disassembling the apparatus. Preferably, the means for removing the disk includes a slideable element such as a tray for carrying the metering disk and means for removable mounting the disk to the tray so that the metering disk is selectively removable from the dispensing apparatus by sliding the tray out from the apparatus to displace the tray for providing access to the metering disk without disassembling the apparatus. The metering disk can then be removed from the slideable tray and the same or another metering disk can be placed back on the slideable tray. Guide and alignment means are provided to assure that the slideable tray carrying the metering disk is returned to its proper operating position within the dispensing apparatus. Preferably the guide and alignment means includes cooperating collars, stop means, and channel brackets operatively associated with the slideable tray to assure that the metering disk is in its proper operating position when the tray is slid into its maximum retracted position within the dispensing apparatus.

The slideable tray carrying the removable metering disk is arranged and oriented relative to the overall dispensing apparatus so that a portion of the tray covers the discharge outlet of the product container of the dispensing apparatus when the tray is slid out from the apparatus. In this manner, when the metering disk is displaced from its operating position by sliding the tray, material cannot flow from the product container because the discharge outlet remains blocked by a portion of the slideable tray.

In a further aspect of the present invention, the openings defined in the rotatable metering disk are oriented such that each opening partially overlaps each adjacent opening. In this manner, flow of product through the rotating metering disk is continuous, and not intermittent, as a result of the arrangement of the successive overlapping adjacent openings.

### DRAWINGS

FIGURE 1 is a side elevational view, in section, illustrating a portion of a spreader apparatus including a metering system in accordance with the present invention, and FIGURES 1A and 1B illustrate portions of FIGURE 1 in greater detail;
FIGURE 2 is a perspective view of a ring gear drive used in the metering system in accordance with the present invention;
FIGURE 3 is a side elevational view of a portion of the dispensing apparatus in accordance with the present invention showing the orientation of a slideable tray carrying a metering disk relative to a support block;
FIGURE 4 is a bottom plan view of a thrust plate of a metering system in accordance with the present invention;
FIGURE 5 is a top plan view of a metering disk in accordance with the present invention;
FIGURE 6A is a top plan view of a slideable tray carrying a metering disk in accordance with the present invention;
FIGURE 6B is a side elevational view of FIGURE 6A;
FIGURE 7 illustrates, in greater detail, the metering disk mounted to the slideable tray, as illustrated in FIGURE 6A; and
FIGURE 8 is a side elevational view illustrating a product container mounted to the dispensing apparatus in accordance with the present invention.

### DESCRIPTION

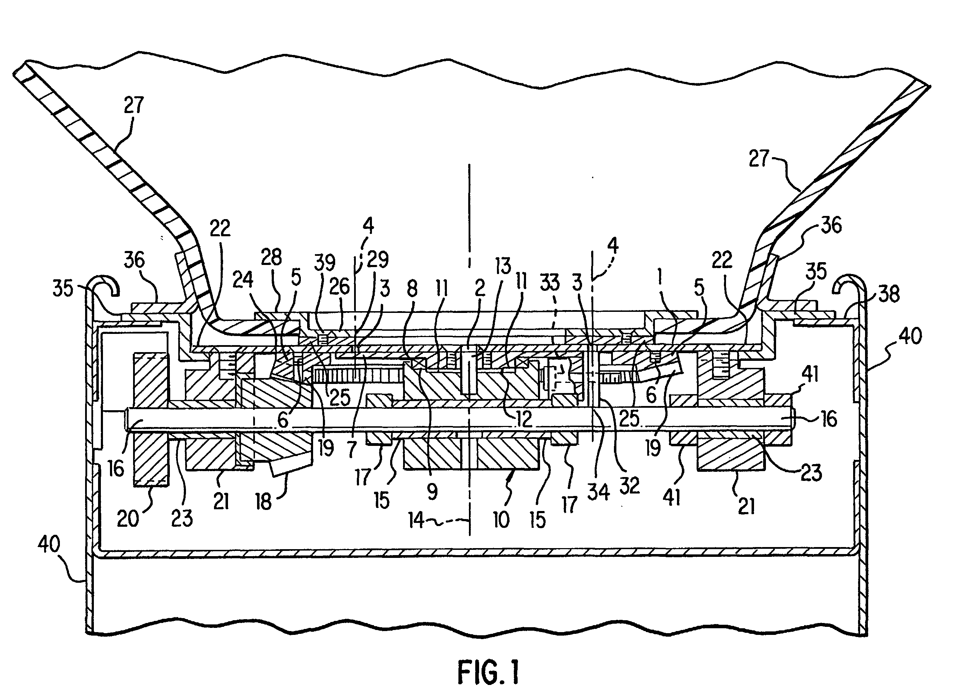

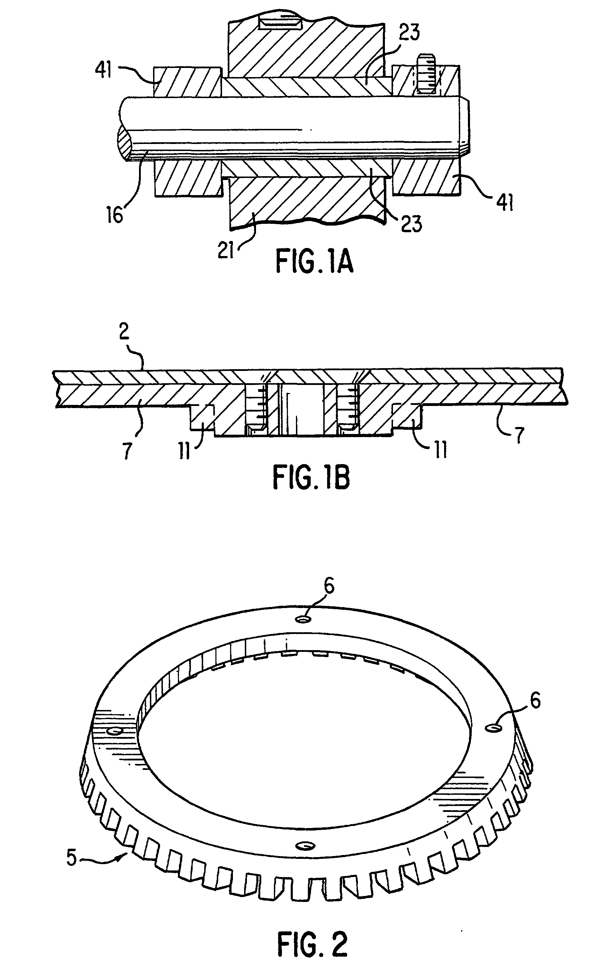

The spreader apparatus in accordance with the present invention will now be described with reference to FIGURES 1 - 8 of the drawing, illustrating the preferred embodiments thereof. In its preferred embodiments, the subject invention is directed to a spreader apparatus, and in particular, improved metering assemblies for such apparatus including relatively rotatable metering disks for controlling the discharge of granular material from the spreader apparatus. The prior art illustrates granular dispensing systems and apparatus including dispensing valves for controlling and metering granular material dispensed from an apparatus.

Turning now to FIGURE 1 of the drawing, the metering device generally designated by reference numeral 1 includes a meter disk generally designated by reference numeral 2. A plurality of openings 3, each of which define a predetermined volume, are defined in the meter disk which is rotatably mounted within the metering device. The metering disk is disposed beneath a product container, and material from that container flows downwardly to the meter disk by gravity feed. Relative rotation of the meter disk controls the flow of material through the openings 3. The openings 3 can be of different size and configuration defined around a bolt circle 4 for further controlling the volume and rate of material dispensed from the device through the rotatable meter disk.

The meter disk 2 is secured to a ring gear drive 5, designated by reference numeral 5, by conventional mounting means, as for example flathead screws, designated by reference numeral 6, received in openings in the ring gear drive 5. As more clearly illustrated in FIGURE 2, four openings in the ring gear drive are equidistantly spaced apart for firmly and uniformly mounting the meter disk to the ring gear drive.

Still referring to FIGURE 1, a thrust plate, generally designated by reference numeral 7, is oriented adjacent to the underside of the meter disk 2. Resilient means, such as a wavy compression spring designated by reference numeral 8 contained in a groove 9 defined in a support block 10 for the meter assembly, exert a force on the thrust plate 7 in a direction towards the underside of the meter disk 2 for supporting the meter disk. Tabs 11 extending from the thrust plate 7 are each received in separate complementary slots 12 defined in the support block 10. Preferably, the tabs 11 have different widths and guide the thrust plate into a predetermined aligned orientation relative to the meter disk, and also prevent the thrust plate from rotating so that it remains in a fixed position relative to the rotatable meter disk supported above the top surface thereof. (See also FIG. 1B).

A meter disk pivot pin, designated by reference numeral 13, is positioned in the support block 10. The pivot pin 13 defines a center axis 14 which extends through the center of a shaft bushing designated by reference numeral 15. A rotatable drive shaft, designated by reference numeral 16, is supported by the shaft bushing 15 which also provides a bearing surface for the rotatable drive shaft. A pair of shaft collars designated by reference numeral 17, located on opposed sides of the shaft bushing 15 in the support block 10, are provided to locate and contain the support block 10 in a predetermined position on the drive shaft 16.

A beveled pinion gear drive 18 is permanently attached to the drive shaft 16. The gear drive 18 is oriented to mesh with a beveled ring gear 19 to provide rotational drive to the drive shaft 16. A chain sprocket 20 provides the driving force for rotating the drive shaft 16, and the drive shaft is supported by a mounting block 21 and a shaft bushing 23 at the end of the drive shaft proximate to the chain sprocket 20. As also illustrated by FIGURE 1, a mounting block 21, together with a shaft bushing 23, supports the drive shaft at the end thereof remote from the chain sprocket 20. The shaft bushing 23, permanently attached to the mounting block 21, provides a bearing surface for the drive shaft 16 at that location. A pair of shaft collars 41, located at opposed ends of the mounting block 21 at the remote end of the drive shaft 16, locate and contain the mounting block 21 in its predetermined operating position at the remote end of the drive shaft 16.

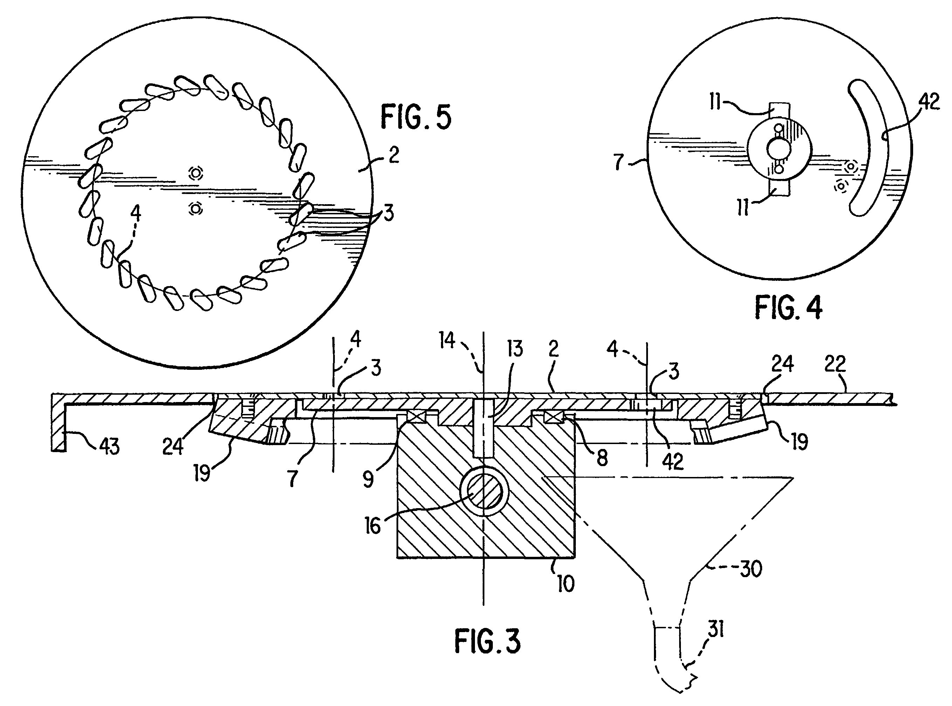

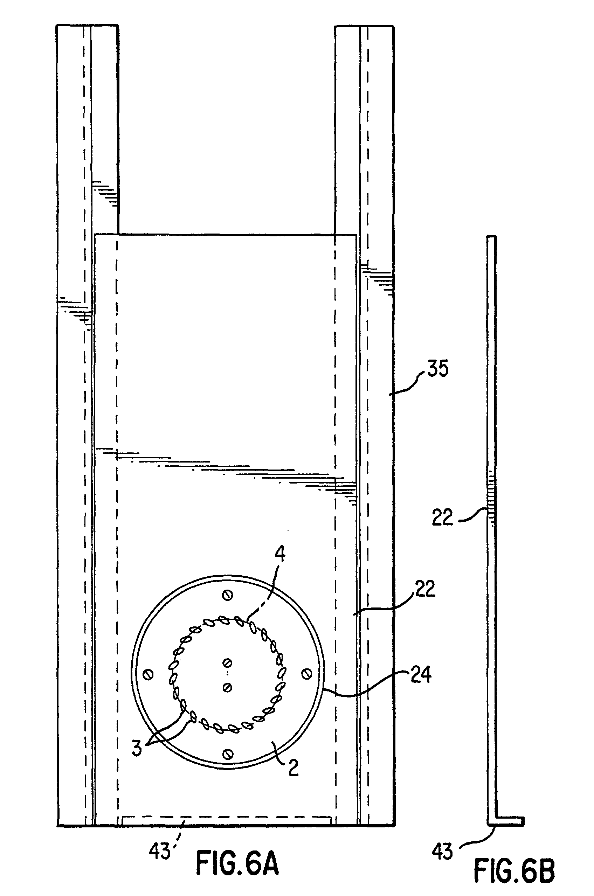

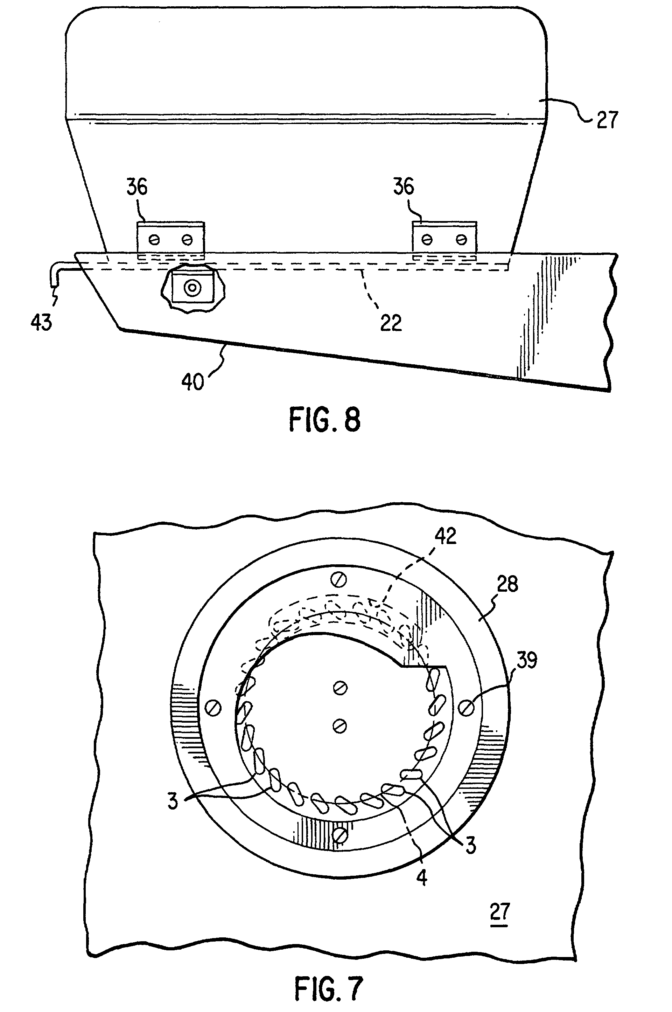

The mounting blocks 21 are permanently attached to a slide tray 22, and the shaft bushings 23 are permanently affixed to the mounting blocks 21 for providing a bearing surface for the drive shaft, and for positioning the drive shaft in a predetermined operating position within the metering device. A clearance opening 24 defined in the slide tray 22, is oriented in radial alignment relative to the center axis 14 (See also FIGURES 3 and 6A). The clearance opening 24 allows the meter disk 2 to extend through the clearance opening 24 and press against a hardened wear plate 25 which is secured to a container ring 26, as illustrated by FIGURE 1. The container ring 26 is mounted to a product dispensing container 27 with a ring flange 28 and flathead screws 39 (See also FIGURE 7). A circular arc wiper 29, positioned on the hardened wear plate 25 and matching the container ring 26, is provided to plow away excess product extending out from openings 3 and above the top surface of the meter disk after the openings are filled to volumetric capacity with product, as the top surface of the meter disk 2 rotates beneath the wear plate 25 which is fixedly oriented relative to the rotating meter disk.

During operation of the metering device, product is initially contained in the openings 3 in the meter disk 2 by the hardened wear plate above the top surface of the meter disk and thrust plate 7 adjacent to the lower surface of the meter disk. The meter disk rotates relative to both the wear plate 25 and the thrust plate 7 which are fixedly mounted in the metering device relative to the rotatable metering disk. The thrust plate 7 defines an accurate slot 42, as best illustrated by FIGURE 4 of the drawing. The slot 42 is oriented and arranged to be in alignment with the openings 3 in the meter disk 2 so that as the meter disk rotates relative to the fixed thrust plate 7 mounted adjacent to the lower surface of the meter disk, product drops from the openings 3, by gravity feed, as the openings 3 are moved over the slot 42. As most clearly illustrated by FIGURE 3, product dropping through the slot 42 of the thrust plate 7 is received in a discharge chute 30 and flows through a discharge tube 31, from which the product is dispensed from the spreader device incorporating the meter device.

FIGURE 1 also illustrates a rubber star wheel, designated by reference numeral 32, mounted to rotate about an axle 33. The wheel 32 includes cone-shaped protrusions 34 having the same pitch as the openings 3 defined in the meter disk 2. In operation, the protrusions 34 slide into the openings 3, insuring that the openings have been completely emptied of product after the openings have rotated over the slot 42 in the thrust plate 7. In this manner, the openings are maintained clear and free from residual material to assure that the full capacity of product received in each of the openings is discharged each time the openings are rotated over the slot in the thrust plate. This, in turn, assures accurate control over the quantity and discharge rate of material by the metering device.

Referring to FIGURES 1, 3, 6A, 6B, 7, and 8, guide brackets, designated by reference numeral 35, are provided to support the slide tray 22. A tab 43, as best illustrated by FIGURES 3 and 6B, extends from one end of the tray 22. The tab can be integrally formed from the tray by bending one end of the tray at a substantially right angle to the longitudinally extending portion of the tray. The slide tray 22 is displaceable, along the guide bracket 35, relative to the remaining components of the metering device including the support block 10 and the thrust and wear plates 7 and 25 which are fixedly mounted relative to the rotatable metering disk 2. As most clearly shown by FIGURE 6A, when the tray 22 is slideably displaced from the meter assembly of the metering device along the supporting bracket means 35, access is provided to the meter disk 2 carried by the tray and displaceable therewith. The metering disk is removably mounted to the tray so that when the tray is slid into its displaced position relative to the meter assembly, the metering disk can be removed from the tray for inspection, maintenance or replacement. In this manner, one metering disk can be replaced with another metering disk having a different orientation of openings 3 or different sized openings 3 to adjust the quantity, flow rate and flow pattern of material metered through the metering disk. When the tray 22 is slid into its displaced position along the guide brackets 35 as illustrated by FIGURE 6A, a non-apertured rear portion of the tray is oriented to cover the discharge opening of the product container to prevent product from being discharged from the container by gravity feed when the metering disk is slid into its displaced position. In this position, the closed rear portion of the slide tray acts as a slide gate to cover the product discharge opening 36 of the container ring 26 mounted to the product dispensing container 27.

The metering disk is returned to its retracted operational position by sliding the tray 22 in a direction back into the metering device. The components of the metering device (i.e., the relative arrangement of the guide elements and the tray) are oriented such that when the tray 22 is slid back into its maximum retracted position within the metering device, the metering disk 2, carried by and movable with the slideable tray, is located in its operating position relative to the other components of the metering device and is positioned directly beneath the discharge outlet of the product container. Preferably, stop means are also provided to limit the maximum displacement of the slide tray along the brackets 35 in a direction out from the meter assembly to prevent complete removal of the tray from the bracket.

Angle brackets 36 are provided for securing the product container 27 to the guide brackets 35. The guide brackets themselves are secured to a portion of the housing for the meter assembly generally designated by reference numeral 38 which extends, at substantially a right angle, from the sidewall 40 of the apparatus (e.g., planter or spreader) carrying the meter assembly.

In accordance with the disclosure of the invention described above, the meter assembly includes means for inspecting and replacing a rotatable metering disk without requiring substantial disassembly of the meter assembly or the overall spreader apparatus.

Turning to FIGURE 5 of the drawing, meter disk 2 defines a plurality of oval shaped openings oriented along a circle 4. The forward end of each opening 3 overlaps the trailing end of the next forward opening. Because each opening 3 partially overlaps the forward end and rear end, respectively, of the two successive adjacent openings, material is continuously metered through the openings 3 as the meter disk 2 rotates in the metering assembly. As discussed herein, the product is metered through the rotatable disk as the openings 3 in the disk pass over the slot 42 defined in the thrust plate 7 positioned beneath the lower surface of the meter disk 2. As a result of the overlapping orientation of the openings 3, at least a portion of one of the openings 3 will always be directly above at least a portion of the slot 42 resulting in continuous flow of product through the openings 3 and the slot 42, by gravity feed, as the meter disk rotates relative to the fixed thrust plate 7. Although FIGURE 5 illustrates the openings 3 as being oval in shape, other shaped openings will also provide continuous product flow provided that the openings are oriented and arranged so that a portion of each opening overlaps a portion of each adjacent opening.

Other modifications falling within the scope of the present invention will become apparent to those skilled in the art. Accordingly, the description of the preferred embodiments herein is intended to be illustrative only and not restrictive of the scope of the invention, that scope being defined by the following claims and all equivalents thereto.

## Claims

1. A meter assembly for controlling discharge of material from a spreader apparatus, said meter assembly (1) comprising a rotatable metering element (2) and means for displacing said rotatable metering element relative to said metering assembly without substantially disassembling said meter assembly, **characterized in that** said means for displacing includes a slideable element (22,43) carrying said rotatable metering element (2), said rotatable metering element (2) being movable with said slideable element (22,43).

2. The meter assembly as claimed in claim 1 wherein said slideable element comprises a tray (22) and/or a tab element (43), said tab element (43) comprising means for sliding said slideable element relative to said meter assembly (1).

3. The meter assembly as claimed one of claims 1 or 2 wherein said rotatable metering element is a disk (2) defining at least one opening (3) therein.

4. The meter assembly as claimed in one of claims 1 to 3 further including guide means (35) operatively associated with said means (22,43) for displacing said rotatable metering element, wherein said guide means (35) optionally comprises at least a portion of a channel adapted to receive said means (22,43) displacing said rotatable metering element for movement thereof along said channel, and the meter assembly (1) further optionally including stop means operatively associated with said guide means (35) for limiting maximum displacement of said means (22,43) for displacing relative to said meter assembly (1).

5. The meter assembly as claimed in one of claims 1 to 4, wherein said rotatable metering element (2) and said means (22,43) for displacing said rotatable metering element are oriented relative to said meter assembly (1) such that said rotatable metering element (2) is in a predetermined operating position in said meter assembly when said means (22,43) for displacing is in a maximum retracted position within said meter assembly.

6. The meter assembly of one of claims 3 to 5 wherein said disk (2) has first and second surfaces, the meter assembly (1) further comprising a first plate (7) having third and fourth surfaces mounted in a supporting block (10) and orientated relative to said metering element such that said third surface of said first plate is adjacent to the second surface of said metering disk (2); and means for applying a force to said first plate (7) for maintaining the top surface of said first plate (7) in a contiguously abutting relationship with the bottom surface of said rotatable metering disk (2), wherein said means for applying a force optionally comprises resilient means (8) and said resilient means optionally comprises at least one resilient element received in a groove (9) defined in said supporting block, said groove (9) and said resilient element (8) being oriented relative to said first plate (7) for exerting a resilient force on said first plate in a direction towards said rotatable metering element.

7. The meter assembly of claim 6 wherein said first plate (7) defines at least one opening (42) therein in alignment with said one opening (3) in said rotatable metering disk (2) as said rotatable metering disk (2) rotates relative to said first plate (7).

8. The meter assembly of one of claims 6 or 7 comprising a second plate (25) having a fifth and sixth surface, said second plate being oriented relative to said rotatable metering element such that said first surface of said rotatable metering disk (2) is adjacent to said sixth surface of said second plate (25), and the meter assembly further optionally including a wiper element (29) carried by said second plate (25) and oriented to remove product extending above said first surface of said metering disk (2) as said metering disk rotates relative to said second plate (25).

9. The meter assembly of one of claims 6 to 8 comprising means (34) insertable into said at least one opening (3) of said metering disk (2) for removing product therefrom.

10. The meter assembly of one of claims 3 to 9 wherein said metering disk (2) defines a plurality of openings (3) therein, said plurality of openings being oriented such that each of said openings at least partially overlaps each of said openings adjacent thereto to provide continuous flow of product through said metering disk as said metering disk (2) rotates.

11. The meter assembly of claim 10 wherein said plurality of openings (3) are oval shaped, said openings (3) being preferably arranged in a circular pattern and oriented in radial alignment on said metering disk (2).

## Patentansprüche

1. Messanordnung zur kontrollierten Abgabe von Material aus einer Streuvorrichtung, wobei die Messanordnung (1) ein drehbares Dosierelement (2) und Mittel zum Versetzen des drehbaren Dosierelements relativ zu der Messanordnung ohne wesentliche Demontage der Messanordnung umfasst, **dadurch gekennzeichnet, dass** die Mittel zum Versetzen ein verschiebbares Element (22, 43) aufweisen, welches das drehbare Dosierelement (2) trägt, wobei das drehbare Dosierelement (2) mit dem verschiebbaren Element (22, 43) bewegbar ist.

2. Messanordnung gemäß Anspruch 1, wobei das verschiebbare Element einen Boden (22) und/oder eine Fahne (43) umfasst, wobei die Fahne (43) Mittel zum Verschieben des verschiebbaren Elements relativ zu der Messanordnung (1) umfasst.

3. Messanordnung gemäß einem der Ansprüche 1 oder 2, wobei das drehbare Dosierelement eine Scheibe (2) ist, in der wenigstens eine Öffnung (3) ausgespart ist.

4. Messanordnung gemäß einem der Ansprüche 1 bis 3, die außerdem Führungsmittel (35) umfasst, die mit den Mitteln zum Versetzen des drehbaren Dosierelements (22, 43) in Wirkverbindung stehen, wobei die Führungsmittel (35) gegebenenfalls wenigstens einen Kanalabschnitt umfassen, der zur Aufnahme der Mittel zum Versetzen des drehbaren Dosierelements (22, 43) zu deren Bewegung entlang des Kanals ausgelegt ist, wobei die Messanordnung (1) gegebenenfalls außerdem Stopmittel umfasst, die mit den Führungsmitteln (35) in Wirkverbindung stehen, um die maximale Verschiebung der Mittel zum Versetzen (22, 43) relativ zu der Messanordnung (1) zu begrenzen.

5. Messanordnung gemäß einem der Ansprüche 1 bis 4, wobei das drehbare Dosierelement (2) und die Mittel zum Versetzen des drehbaren Dosierelements (22, 43) relativ zu der Messanordnung (1) so orientiert sind, dass das drehbare Dosierelement (2) sich in einer bestimmten Betriebsposition in der Messanordnung befindet, wenn sich die Mittel zum Versetzen (22, 43) in einer maximal eingefahrenen Position innerhalb der Messanordnung befinden.

6. Messanordnung gemäß einem der Ansprüche 3 bis 5, wobei die Scheibe (2) erste und zweite Oberflächen aufweist und die Messanordnung (1) außerdem eine erste Platte (7) mit dritten und vierten Oberflächen umfasst, welche in einem Halteblock (10) montiert und bezüglich des Dosierelements so orientiert ist, dass die dritte Oberfläche der ersten Platte an die zweite Oberfläche der Dosierscheibe (2) angrenzt, wobei außerdem Mittel zu Kraftbeaufschlagung der ersten Platte (7) vorgesehen sind, um die Oberseite der ersten Platte (7) in einer angrenzend aneinanderstoßenden Beziehung mit der Unterseite der drehbaren Dosierscheibe (2) zu halten, wobei die Mittel zur Kraftbeaufschlagung gegebenenfalls elastische Mittel (8) umfassen und die elastischen Mittel gegebenenfalls wenigstens ein in einer in dem Halteblock ausgesparten Nut (9) eingesetztes elastisches Element umfassen, wobei die Nut (9) und das elastische Element (8) so relativ zu der ersten Platte (7) orientiert sind, dass eine elastische Kraft in Richtung des drehbaren Dosierelements auf die erste Platte ausgeübt wird.

7. Messanordnung gemäß Anspruch 6, wobei die erste Platte (7) wenigstens eine Öffnung (42) aufweist, die, wenn die drehbare Dosierscheibe (2) bezüglich der ersten Platte (7) rotiert, mit der einen in der drehbaren Dosierscheibe (2) vorgesehenen Öffnung (3) fluchtet.

8. Messanordnung gemäß einem der Ansprüche 6 oder 7, die eine zweite Platte (25) mit einer fünften und sechsten Oberfläche umfasst, wobei die zweite Platte bezüglich des drehbaren Dosierelements so orientiert ist, dass die erste Oberfläche der drehbaren Dosierscheibe (2) an die sechste Oberfläche der zweiten Platte (25) angrenzt und die Messanordnung gegebenenfalls außerdem ein von der zweiten Platte (25) getragenes Wischelement (29) aufweist, das so orientiert ist, dass über die erste Oberfläche der Dosierscheibe (2) hinausragendes Produkt entfernt wird, wenn die Dosierscheibe bezüglich der zweiten Platte (25) rotiert.

9. Messanordnung gemäß einem der Ansprüche 6 bis 8, die Mittel (34) umfasst, die in die wenigstens eine Öffnung (3) der Dosierscheibe (2) einsetzbar sind, um Produkt daraus zu entfernen.

10. Messanordnung gemäß einem der Ansprüche 3 bis 9, wobei die Dosierscheibe (2) zahlreiche Öffnungen (3) aufweist, wobei die zahlreichen Öffnungen so orientiert sind, dass jede der Öffnungen wenigstens teilweise mit den benachbarten Öffnungen überlappt, um einen kontinuierlichen Produktstrom durch die Dosierscheibe zu gewährleisten, wenn die Dosierscheibe (2) rotiert.

11. Messanordnung gemäß Anspruch 10, wobei die zahlreichen Öffnungen (3) oval geformt sind und die Öffnungen (3) vorzugsweise in einem kreisförmigen Muster angeordnet und in einer radialen Ausrichtung auf der Dosierscheibe (2) orientiert sind.

## Revendications

1. Dispositif de mesure pour le contrôle de la décharge de matière à partir d'un appareil distributeur, ledit dispositif de mesure (1) comprenant un élément de mesure mobile en rotation (2) et un moyen pour le déplacement du dit élément de mesure mobile en rotation par rapport au dit dispositif de mesure sans désassemblage substantiel du dit dispositif de mesure, **caractérisé par le fait que** ledit moyen de déplacement comporte un élément coulissable (22,43) portant ledit élément de mesure mobile en rotation (2), ledit élément de mesure mobile en rotation (2) étant déplaçable avec ledit élément coulissable (22,43).

2. Dispositif de mesure selon la revendication 1, dans lequel ledit élément coulissable comprend un plateau (22) et/ou un élément formant languette (43), ledit élément formant languette (43) comprenant des moyens pour le coulissement du dit élément coulissable par rapport au dit dispositif de mesure (1).

3. Dispositif de mesure selon l'une des revendications 1 ou 2, dans lequel ledit élément de mesure mobile en rotation est un disque (2) définissant au moins une ouverture (3) en lui.

4. Dispositif de mesure selon l'une des revendications 1 à 3 comportant en outre un moyen formant guide (35) associé de manière opérationnelle au dit moyen (22,43) pour le déplacement du dit élément de mesure mobile en rotation, tandis que ledit moyen formant guide (35) comprend en option au moins une portion d'un canal adapté pour recevoir ledit moyen (22,43) déplaçant ledit élément mobile de mesure en rotation pour son mouvement le long du dit canal, et le dispositif de mesure (1) comportant en outre en option un moyen d'arrêt associé de manière opérationnelle au dit moyen formant guide (35) pour limiter le déplacement maximum du dit moyen (22,43) pour le déplacement par rapport au dit dispositif de mesure (1).

5. Dispositif de mesure selon l'une des revendications 1 à 4, dans lequel ledit élément de mesure mobile en rotation (2) et ledit moyen (22,43) pour le déplacement du dit élément de mesure mobile en rotation sont orientés par rapport au dit dispositif de mesure (1) de telle manière que ledit élément de mesure mobile en rotation (2) soit dans une position de fonctionnement prédéterminée dans ledit dispositif de mesure lorsque ledit moyen (22,43) pour le déplacement est dans une position rétractée au maximum dans ledit dispositif de mesure.

6. Dispositif de mesure selon l'une des revendications 3 à 5, dans lequel ledit disque (2) a une première et une deuxième surfaces, le dispositif de mesure (1) comprenant en outre une première plaque (7) ayant des troisième et quatrième surfaces montées dans un bloc support (10) et orientée par rapport au dit élément de mesure de telle manière que ladite troisième surface de ladite première plaque soit adjacente à la deuxième surface du dit disque de mesure (2); et un moyen pour l'application d'une force à ladite première plaque (7) pour maintenir la surface supérieure de ladite première plaque (7) dans une relation de butée contiguë avec la surface inférieure du dit disque de mesure mobile en rotation (2), tandis que ledit moyen pour l'application d'une force comprend en option un moyen résilient (8) et que ledit moyen résilient comprend en option au moins un élément résilient accueilli dans un sillon (9) défini dans ledit bloc support, ledit sillon (9) et ledit élément résilient (8) étant orientés par rapport à ladite première plaque (7) pour exercer une force résiliente sur ladite première plaque dans une direction orientée vers ledit élément de mesure mobile en rotation.

7. Dispositif de mesure selon la revendication 6, dans lequel ladite première plaque (7) définit au moins une ouverture (42) en elle, en alignement avec ladite ouverture (3) dans ledit disque de mesure mobile en rotation (2) lorsque ledit disque de mesure mobile en rotation (2) tourne par rapport à ladite première plaque (7).

8. Dispositif de mesure selon l'une des revendications 6 ou 7, comprenant une deuxième plaque (25) ayant une cinquième et une sixième surfaces, ladite deuxième plaque étant orientée par rapport au dit élément de mesure mobile en rotation de telle manière que ladite première surface du dit disque de mesure mobile en rotation (2) soit adjacente à ladite sixième surface de ladite deuxième plaque (25), et le dispositif de mesure comportant en outre en option un élément formant raclette (29) porté par ladite deuxième plaque (25) et orienté de manière à enlever le produit s'étendant au-dessus de ladite première surface du dit disque de mesure (2) lorsque ledit disque de mesure tourne par rapport à ladite deuxième plaque (25).

9. Dispositif de mesure selon l'une des revendications 6 à 8, comprenant un moyen (34) pouvant être inséré dans ladite au moins une ouverture (3) du dit disque de mesure (2) pour l'enlèvement de produit de celui-ci.

10. Dispositif de mesure selon l'une des revendications 3 à 9, dans lequel ledit disque de mesure (2) y définit une pluralité d'ouvertures (3), ladite pluralité d'ouvertures étant orientée de telle manière que chacune des dites ouvertures recouvre au moins partiellement chacune des dites ouvertures qui sont adjacentes à elles pour procurer un écoulement continu de produit à travers ledit disque de mesure lorsque ledit disque de mesure (2) tourne.

11. Dispositif de mesure selon la revendication 10, dans lequel ladite pluralité d'ouvertures (3) sont de forme ovale, lesdites ouvertures (3) étant de préférence agencées selon une figure circulaire et orientées en alignement radial sur ledit disque de mesure (2).
